# EUROPÄISCHE PATENTSCHRIFT

(11) **EP 1 071 596 B1**
(45) Veröffentlichungstag und Bekanntmachung des Hinweises auf die Patenterteilung: **30.01.2002**
(21) Anmeldenummer: 99917904.7
(22) Anmeldetag: 29.03.1999
(51) Int. Cl.: B60T 11/04, B60T 7/10

(54) **BREMSKRAFTVERTEILERGETRIEBE FÜR EIN MUSKELKRAFTBETÄTIGTES FESTSTELLBREMSSYSTEM MIT EINEM MEHRTEILIGEN HEBELGETRIEBE**
BRAKE-POWER PROPORTIONING MECHANISM FOR A MANUALLY ACTUATED PARKING-BRAKE SYSTEM COMPRISING A MULTI-PIECE LEVER MECHANISM
MECANISME REPARTITEUR DE PUISSANCE DE FREINAGE POUR UN SYSTEME DE FREIN DE STATIONNEMENT ACTIONNE PAR LA FORCE MUSCULAIRE, COMPORTANT UN MECANISME A LEVIERS EN PLUSIEURS PARTIES

(30) Priorität: 16.04.1998 DE 19816800
(43) Veröffentlichungstag der Anmeldung: 31.01.2001
(73) Patentinhaber: DaimlerChrysler AG, 70567 Stuttgart (DE)
(72) Erfinder: EMMANN, Siegfried, D-71384 Weinstadt (DE); MOSLER, Christian, D-70378 Stuttgart (DE); SPIELMANN, Werner, D-71576 Burgstetten (DE)
(86) Internationale Anmeldenummer: EP9902144
(87) Internationale Veröffentlichungsnummer: WO9954180

(56) Entgegenhaltungen:
- DE-A- 3 822 436
- DE-A- 19 733 552
- DE-C- 355 153
- DE-C- 4 401 084

## Beschreibung

Die Erfindung betrifft ein Bremskraftverteilergetriebe für ein muskelkraftbetätigtes Feststellbremssystem eines Kraftfahrzeugs bei dem die Bremskraft über Seilzüge sowohl auf eine Rad- oder Wellenbremse am Fahrzeuggetriebe als auch auf Radbremsen mindestens einer angetriebenen Fahrzeugachse übertragen wird, wobei die Radbremsen pro Fahrzeugachse über jeweils ein in einem Gehäuse oder Gestell gelagerten Ausgleichselement angelenkt werden und wobei das Verteilergetriebe ein Hebelgetriebe ist, das mindestens einen Waagebalken umfaßt, der die Bremskraft auf die Getriebe- und Radbremsen verteilt.

Ein derartiges Bremskraftverteilergetriebe ist aus der nicht vorveröffentlichten DE 197 33 552.7 bekannt. Dort wird ein Hebelgetriebe beschrieben, das an einem Gehäuse angeordnet ist und sowohl einen Betätigungshebel als auch einen Waagebalken umfaßt. Der Betätigungshebel und der Waagebalken sind über ein Schwenkgelenk miteinander gekoppelt. An einem Ende des Waagebalkens ist ein Ausgleichselement mit den Radbremsseilzügen gelenkig gelagert, während am anderen Ende der Getriebebremsseilzug eingehängt ist. Das gesamte Getriebe ist in und an einem Gehäuse vor der Fahrzeughinterachse zwischen dem Fahrzeugrahmen angeordnet. Aufgrund der Hebelanordnung lenkt der Betätigungsseilzug das Gehäuse - in der Draufsicht gesehen - außermittig an. Folglich benötigt man zur Betätigung des Feststellbremssystems einen in einem Schutzrohr geführten Seilzug, um das Verteilergetriebe sowohl in einem Links- als auch Rechtslenker einsetzen zu können.

DE-C-355 153 offenbart ein Bremskraftverteilergetriebe gemäß dem Oberbgriff des Anspruchs 1. Der Erfindung liegt daher das Problem zugrunde, ein Bremskraftverteilergetriebe zu schaffen, das auf einer ungleich griffigen Fahrbahn eine ausreichende Feststellwirkung auch bei einem Ausfall eines Teils der Bremsanlage gewährleistet. Das Verteilergetriebe soll bei einem geringen Bauraumbedarf, einem niedrigen Wartungsaufwand und einfacher Nachstellbarkeit als Modul aufgebaut sein und sowohl für einen Rechtslenker als auch einen Linkslenker die gleichen Bauteile benötigen.

Das Problem wird mit den Merkmalen des Hauptanspruchs gelöst. Das im Gehäuse oder Gestell angeordnete Ausgleichselement ist an einem Hebel im Bereich zwischen dessen Enden gelagert. Der Hebel ist mit einem Ende am Gehäuse oder Gestell schwenkbar fixiert und ist mit dem anderen Ende in ein Hebelgetriebeseil eingehängt. Das Hebelgetriebeseil und der zur Getriebebremse führende Seilzug sind an dem gegebenenfalls entfernt positionierten Waagebalken angelenkt, wobei im Bereich zwischen den Anlenkstellen für das Hebelgetriebeseil und den Getriebebremsseilzug eine Anlenkstelle für das Betätigungsseil oder ein Betätigungselement liegt.

Das Bremskraftverteilergetriebe verteilt die Bremsbetätigungskraft über den Waagebalken und die Seilzüge derart, daß die Bremswirkung der Radbremsen ausreichend die Gesetzes- und/oder Werksnorm zur Bremswirkung auf ungleich griffiger Fahrbahn erfüllt. Hierbei wird ein großer Anteil der Bremsbetätigungskraft der hochwirksamen Getriebebremse zugeteilt. Werden für die Getriebebremse und die Feststellbremsen der Räder z.B. Duo-Servobremsen verwendet, so erhält beispielsweise jede Radbremse einer Achse 35% und die Getriebebremse 30% der Betätigungskraft. Die Kombination von Getriebe- und Radbremsen ermöglicht auch bei einem Ausfall einer Radbremse noch eine hohe Bremswirkung auf einer ungleich griffigen Fahrbahn. Steht beispielsweise das Rad mit der ausgefallenen Feststellbremse auf einer glatten Eisfläche, so verhindert das auf einem griffigen Fahrbahnabschnitt stehende Rad ein Wegrutschen des Fahrzeugs trotz einem erheblichen Bremskraftverlust. Denn die Getriebebremse blockiert gemeinsam mit der noch arbeitenden Feststellbremse das Achsdifferential, so daß das Feststellen des auf der Eisfläche stehenden Rades über das Differential durch das Blockieren des auf dem griffigen Fahrbahnabschnitt stehenden Rades erfolgt. Das auf der Eisfläche stehende Rad kann sich nicht drehen und damit kann ein Anrollen erst gar nicht beginnen.

Das Hebelgetriebe übersetzt die Muskelkraft des die Feststellbremse betätigenden Kraftfahrers derart, daß auf eine Fremdkraft auch bei Kraftfahrzeugen mit 5 bis 8 Tonnen zulässigem Gesamtgewicht verzichtet werden kann.

Weitere Einzelheiten der Erfindung ergeben sich aus den nicht oder nur teilweise zitierten Unteransprüchen und der nachfolgenden Beschreibung einer schematisch dargestellten Ausführungsform:
Figur 1: Bremskraftverteilergetriebe;
Figur 2: Nachstelleinrichtung für das Ausgleichselement.

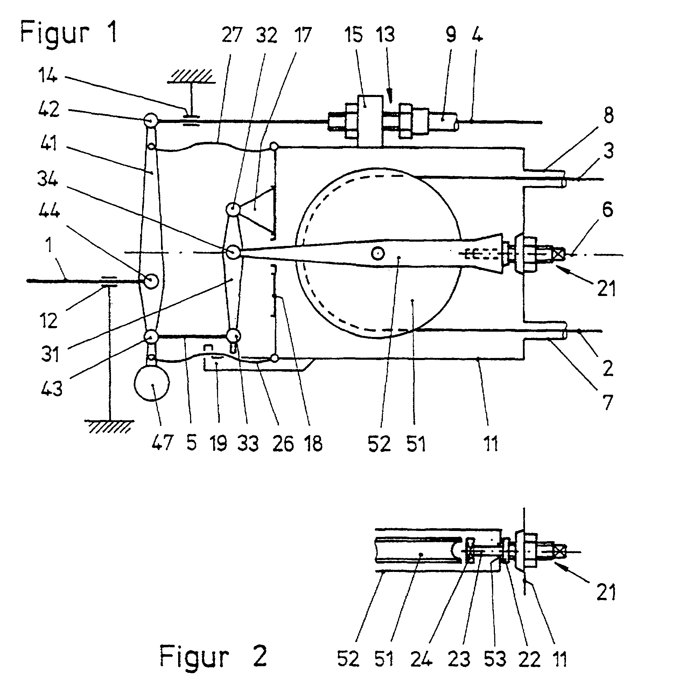

Figur 1 zeigt ein Bremskraftverteilergetriebe das am Kraftfahrzeug zwischen einem muskelkraftbetätigten Betätigungselement und den verschiedenen, feststellbaren Bremsen angeordnet ist. Vom nicht dargestellten Betätigungselement kommt ein Seilzug (1) der die Muskelkraft über einen Waagebalken (41) und einen Hebel (31) auf die Seilzüge (2, 3, 4) verteilt. Die Seilzüge (2-4) sind nach dem Hebelgetriebe in Schutzrohren (7-9) geführt, die sich an einem am Kraftfahrzeug fest angeordneten Gehäuse (11) abstützen. Das Schutzrohr (9) endet am Gehäuse (11) in einer Nachstelleinrichtung (13). Letztere ist beispielsweise ein kurzes, das Schutzrohr (9) abstützende Rohrstück mit einem Außensechskant und einem Außengewinde. Es ist am Gehäuse oder wie hier an einem separaten Träger (15) in Gewindebohrungen eingeschraubt und mit einer Mutter gekontert.

Am Gehäuse (11) ist in einem Lagerbock (17) ein Hebel (31) angelenkt. Der Hebel (31) hat an dem einen Ende eine Gelenkstelle (32) und dem anderen eine Anlenkstelle (33), wobei in letzterer das den Hebel (31) betätigende Hebelgetriebeseil (5) eingehängt ist. Der Hebel (31) hat im Bereich zwischen den An- und Gelenkstellen (33) und (32) eine Gelenkstelle (34), über die er mit dem Ausgleichselement (51) verbunden ist. Das Ausgleichselement, das hier beispielsweise eine Ausgleichsrolle (51) ist, ist über einen Rollenträger (52) in der Gelenkstelle (34) gelenkig gelagert. Die Seilzüge (2) und (3) sind im Ausführungsbeispiel Teile eines Drahtseils, das die Ausgleichsrolle (51) auf ca. 180° umschlingt.

Das Hebelgetriebeseil (5) und der Seilzug (4) sind am Waagebalken (41) eingehängt. Der Waagebalken (41) hat dazu die Anlenkstellen (43) und (42). Im Bereich zwischen diesen beiden Anlenkstellen befindet sich auf dem Waagebalken eine weitere Anlenkstelle (44). In letzterer ist das Betätigungsseil (1) eingehängt. Der Waagebalken (41) verteilt die in die Anlenkstelle (44) eingeleitete Feststellkraft auf den zur Getriebebremse führenden Seilzug (4) und den Hebel (31) mit dem die Radbremsseilzüge (2) und (3) tragenden und/oder umlenkenden Ausgleichselement (51).

Zur Übersetzung der die Feststellbremsen betätigenden Muskelkraft ist die Hebellänge zwischen den Anlenkstellen (42) und (44) größer als die Hebellänge zwischen den Anlenkstellen (43) und (44). Die Hebelverhältnisse am Waagebalken (41), am Hebel (31) und an den nicht dargestellten Hebeln bzw. Betätigungselementen der Getriebebremse und der Radbremsen sind so aufeinander abgestimmt, daß die Radbremsen ca. 70±10% der Feststellkraft zugeteilt bekommen. Dabei kann es notwendig sein, daß der zur Getriebebremse führende Seilzug (4) nicht direkt, sondern über ein Zwischenseil in der Anlenkstelle (42) endet. Das Zwischenseil wirkt auf einen am Gehäuse (11) abgestützten Hebel, in dem zur weiteren Übersetzung der Betätigungskraft der Seilzug (4) eingehängt ist.

Der Waagebalken (41) sitzt in Fahrtrichtung gesehen vor dem Gehäuse (11). Er ist in der Regel zwischen den beiden Rahmenlängsträgern des Fahrzeugchassis angeordnet. Um ein Schwingen des frei zwischen den Seilen bzw. Seilzügen (1), (4) und (5) hängenden Waagebalkens (41) zu minimieren oder zu vermeiden, sind u.a. das Seil (1) und der Seilzug (4) in den am Fahrzeugaufbau befestigten Ösen (12) und (14) geführt.

Zusätzlich ist im Ausführungsbeispiel der Waagebalken (41) im Bereich der Anlenkstelle (43) mit einem Ausgleichsgewicht (47) ausgestattet, so daß der Balken rechts und links von Seil (1) annähernd die gleiche Masse hat. Auf diese Weise wird verhindert, daß eine das Seil (1) tortierende Pendelschwingung entsteht. Anstelle des Ausgleichsgewichts (47) kann der Waagebalken (41) eine Gestalt haben, die rechts und links der Schwingungsachse eine im wesentlichen vergleichbare Masse ermöglicht. Gegebenenfalls kann der Waagebalken (41) zu Dämpfungszwecken auch zumindest abschnittsweise auf einer Führung oder dergleichen aufliegen.

Um bei einem Bruch des Drahtseils der Seilzüge (2) und (3) nicht den Ausfall der gesamten Feststellbremsanlage durch ein Kippen des Waagebalkens (41) zu riskieren, ist am Gehäuse (11) beispielsweise eine Anschlag- und Nachstellschraube (21) eingeschraubt und gekontert, vgl. Figur 2. Die Schraube (21) hat einen dreiteiligen Kopf. Unmittelbar an das Gewinde schließt sich ein Nachstellbund (22) an, an dessen Stirnfläche nachstellbar - bei nicht betätigter Feststellbremse - der Rollenträger (52) anliegt. An den Nachstellbund (22) schließt sich ein Schaft (23) an, der in einen Anschlagbalken (24) übergeht. Letzterer hat zwei plane Seitenflächen, deren Abstand dem Durchmesser des Schaftes (23) entspricht. Der Anschlagbalken (24) wird bei der Montage durch ein im Rollenträger (52) vorhandenes Langloch (53) gesteckt und in einer Einschraubstellung so positioniert, daß er sich mit dem Langloch (53) kreuzt. Die Einschraubtiefe im Gehäuse (11) ist von der Nachstellposition des Nachstellbunds (22) abhängig.

Beim Bruch eines Seilzugs (2) und/oder (3) legt sich bei einer Betätigung der Feststellbremse der Rollenträger (52) an den über den Schaft (23) überstehenden Balkenabschnitt des Anschlagbalkens (24) an und verhindert so ein unkontrolliertes Schwenken des Hebels (31) und des Waagebalkens (41), so daß zumindest die Getriebebremse betätigbar bleibt. Die Schraube (21), die zum Nachstellen um jeweils 180°, an ihrem freien Ende einen Vierkant trägt, verändert mit dem Nachstellen auch die Anschlagposition. Hierbei bleibt der Gesamthub des Rollenträgers konstant.

Das die Seilzüge (2,3) bildende Drahtseil ist gegebenenfalls ca. auf der halben Umschlingungsstrecke an der Ausgleichsrolle (51) befestigt. In diesem Fall ist der Schwenkwinkel der Ausgleichsrolle (51) gegenüber dem Rollenträger (52) zusätzlich mechanisch begrenzt, so daß bei dem Reißen eines Seilzugs (2) oder (3) der nicht gerissene, andere Seilzug gehalten wird und das Feststellen einer Radbremse weiterhin möglich ist.

Alternativ zu der Anschlagschraube (21) kann auch der Schwenkweg des Hebels (31) durch einen am Gehäuse (11) befestigten Anschlag (19) begrenzt werden.

Um bei einem Bruch des Hebelgetriebeseils (5) und/oder des Seiles der Seilzüge (2) und (3) zumindest die Getriebebremse noch betätigen zu können, ist ein Sicherungsseil (26) zwischen dem Gehäuse (11) und dem Waagebalken (41) im Bereich der Anlenkstelle (43) angeordnet. Beispielsweise bei einem Bruch des Hebelgetriebeseils (5) spannt sich das Sicherungsseil (26). Bei einem Betätigen des Seiles (1) wird dann der Waagebalken (41) annähernd um die Anlenkstelle (43) geschwenkt und der Seilzug (4) auf Zug belastet.

Um bei einem Reißen des Getriebebremsseilzugs (4) die Feststellung der Radbremsen weiterhin zu gewährleisten, ist der Waagebalken (41) beispielsweise im Bereich der Anlenkstelle (42) über ein Sicherungsseil (27) am Gehäuse (11) angelenkt, so daß der Waagebalken (41) nicht im Gegenuhrzeigersinn wegkippen kann.

Die Sicherungsseile (26) und (27) sind im regulären Betrieb soweit lose verlegt, daß sie die normale Funktion des Feststellbremssystems nicht beeinträchtigen.

Das in Figur 1 dargestellte Verteilergetriebe zeigt die Seile und Hebel in einer vereinfachten zweidimensionalen Anordnung. In der Praxis liegt der Seilzug (4) annähernd mittig über der Ausgleichsrolle (51). Beide Bauteile liegen ungefähr mittig zwischen den beiden Längsträgern des Fahrzeugaufbaus auf der Fahrzeugmittellinie (6). Da also der Gelenkpunkt (34) unter dem Seilzug (4) liegt, kann bei einem Einbau des Verteilergetriebes in einen rechtslenkenden Lastkraftwagen der Waagebalken (41) und der Hebel (31) ohne Bauteiländerung um 180° geschwenkt angeordnet werden. Der Hebel (31) wird zusammen mit seinem Lagerbock (17) am Gehäuse nur umgesteckt. Er sitzt dann im Lagersitz (18). Auch der gegebenenfalls verwendete Anschlag (19) ist am Gehäuse (11) umsteckbar befestigt.

Das außermittig verlaufende Betätigungsseil (1) liegt dann auf der anderen Seite der Fahrzeugmittellinie (6), so daß es auch im Rechtslenkerfahrerhaus ohne zusätzliche Seilumlenkungen am Betätigungselement des Feststellbremssystems endet.

### Bezugszeichenliste

- 1: Seilzug zum Betätigungselement
- 2, 3: Seilzüge zu den Radbremsen
- 4: Seilzug zu der Getriebebremse
- 5: Hebelgetriebeseilzug
- 6: Fahrzeugmittellinie
- 7,8,9: Schutzrohre

- 11: Gehäuse
- 12, 14: Ösen
- 13: Nachstelleinrichtung

- 15: Träger für (13)
- 17: Lagerbock
- 18: Lagersitz für (17) bei Rechtslenkern
- 19: Gehäuseanschlag

- 21: Anschlag- und Nachstellschraube
- 22: Nachstellbund
- 23: Schaft
- 24: Anschlagbalken

- 26, 27: Sicherungsseile

- 31: Hebel
- 32: Gelenkstelle am Gehäuse
- 33: Anlenkstelle für das Seil (5)
- 34: Gelenkstelle

- 41: Waagebalken
- 42: Anlenkstelle für den Seilzug (4)
- 43: Anlenkstelle für (5)
- 44: Anlenkstelle für (1)
- 47: Ausgleichsgewicht

- 51: Ausgleichselement, Ausgleichsrolle
- 52: Rollenträger
- 53: Langloch

## Patentansprüche

1. Bremskraftverteilergetriebe für ein
muskelkraftbetätigtes Feststellbremssystem eines Kraftfahrzeugs bei dem die Bremskraft über Seilzüge (2,3,4) sowohl auf eine Rad- oder Wellenbremse am Fahrzeuggetriebe als auch auf Radbremsen mindestens einer angetriebenen Fahrzeugachse übertragen wird, wobei die Radbremsen pro Fahrzeugachse über jeweils ein in einem Gehäuse (11) oder Gestell gelagerten Ausgleichselement (51) angelenkt werden **dadurch gekennzeichnet,**
- **daß** das Verteilergetriebe ein Hebelgetriebe ist, das mindestens einen Waagebalken (41) umfaßt, der die Bremskraft auf die Getriebe- und Radbremsen verteilt,
- **daß** das Ausgleichselement (51) an einem Hebel (31) im Bereich zwischen dessen Enden gelagert ist, wobei der Hebel (31) mit einem Ende am Gehäuse (11) schwenkbar gelagert ist und mit dem anderen Ende in ein Hebelgetriebeseil (5) eingehängt ist,
- **daß** das Hebelgetriebeseil (5) und der zur Getriebebremse führende Seilzug (4) am Waagebalken (41) angelenkt sind, wobei im Bereich zwischen den Anlenkstellen (43,42) für das Hebelgetriebeseil (5) und den Getriebebremsseilzug (4) eine Anlenkstelle (44) für das Betätigungsseil (1) oder ein Betätigungselement liegt.

2. Bremskraftverteilergetriebe gemäß Anspruch 1, **dadurch gekennzeichnet, daß** der Waagebalken (41) räumlich getrennt von Getriebegehäuse (11) und dem Hebel (31) angeordnet ist, wobei der Abstand zwischen dem Waagebalken und dem Hebel (31) mindestens 0,4 Meter beträgt.

3. Bremskraftverteilergetriebe gemäß Anspruch 1, **dadurch gekennzeichnet, daß** der Waagebalken (41) im Bereich seiner Enden mit Hilfe von Sicherungsseilen (26, 27) am Gehäuse (11) befestigt ist, wobei die Sicherungsseile (26, 27) im Normalfall nicht gespannt sind.

4. Bremskraftverteilergetriebe gemäß Anspruch 1, **dadurch gekennzeichnet, daß** das Betätigungsseil (1) - in Fahrtrichtung gesehen - unmittelbar vor dem Waagebalken (41) in einer am Fahrzeugaufbau sich abstützenden Öse (12) geführt ist.

5. Bremskraftverteilergetriebe gemäß Anspruch 1, **dadurch gekennzeichnet, daß** der Getriebebremsseilzug (4) - in Fahrtrichtung gesehen - unmittelbar hinter dem Waagebalken (41) in einer am Fahrzeugaufbau sich abstützenden Öse (14) geführt ist.

6. Bremskraftverteilergetriebe gemäß Anspruch 1, **dadurch gekennzeichnet, daß** der Waagebalken (41) bei unterschiedlich langen Hebelabschnitten zwischen den Anlenkstellen (44, 43) und (44, 42) im Bereich des freien Endes des kürzeren oder leichteren Hebelabschnitts ein Ausgleichsgewicht (47) trägt.

7. Bremskraftverteilergetriebe gemäß Anspruch 6, **dadurch gekennzeichnet, daß** die Hebelabschnitte des Waagebalkens (41) bezüglich einer horizontalen, annähernd parallel zur Fahrzeuglängsrichtung ausgerichteten und die Anlenkstelle (44) schneidenden Schwenkachse austariert sind.

## Claims

1. A braking effort proportioning transmission for a manually controlled parking brake system in a motor vehicle in which the braking effort is transmitted via cables both to a wheel or shaft brake on the vehicle transmission and to wheel brakes on at least one vehicle axle, the wheel brakes on each vehicle axle each being linked by one compensating element (51) mounted in a housing (11) or cradle, **characterised in that**
- the proportioning transmission is a lever transmission comprising at least one balance arm (41) which proportions the braking effort between the transmission and wheel brakes,
- the compensating element (51) is mounted on a lever (31) in the area between the two ends of said lever (31), one end of the lever (31) being mounted on the housing (11) in such manner that it can pivot and the other end being suspended from a lever transmission cable (5),
- the lever transmission cable (5) and the cable (4) leading to the transmission brake are linked at the balance arm (41), a link point (44) for the actuating cable (1) or an actuating element being located in the area between the link points for the lever transmission cable (5) and the transmission brake cable (4).

2. A braking force proportioning transmission in accordance with claim 1, **characterised in that** the balance arm (41) is positioned such that it is spatially separated from the transmission housing (11) and the lever (31), the gap between the balance arm (41) and the lever (31) being at least 0.4 metres.

3. A braking force proportioning transmission in accordance with claim 1, **characterised in that** the ends of the balance arm (41) are fixed by means of safety cables (26, 27) to the housing (11), the safety cables (26, 27) not normally being under tension.

4. A braking force proportioning transmission in accordance with claim 1, **characterised in that** ― when viewed in the direction of travel - the actuating cable (1) is fed into an eye (12) supported on the bodywork of the vehicle immediately before the balance arm (41).

5. A braking force proportioning transmission in accordance with claim 1, **characterised in that** ― when viewed in the direction of travel - the transmission brake cable (4) is fed into an eye (12) supported on the bodywork of the vehicle immediately before the balance arm (41).

6. A braking force proportioning transmission in accordance with claim 1, **characterised in that** with different length lever sections between link points (44, 43) and (44, 42) the balance arm (41) supports a compensating weight (47) in the area of the free end of the shorter or lighter lever section.

7. A braking force proportioning transmission in accordance with claim 6, **characterised in that** the lever sections of the balance arm (41) are counterbalanced in relation to a horizontal axis of rotation aligned almost parallel to the lengthways direction of the vehicle and intersecting the link point (44).

## Revendications

1. Mécanisme répartiteur de force de freinage pour un système de frein de stationnement actionné par la force musculaire dans un véhicule automobile, dans lequel la force de freinage est transmise via des commandes à câbles (2, 3, 4) aussi bien à un frein de roue ou à un frein d'arbre sur la transmission du véhicule qu'à des freins de roue d'au moins un essieu moteur du véhicule, les freins de roue de chaque essieu de véhicule étant articulés via un élément de compensation respectif (51) monté dans un boîtier (11) ou dans un bâti, **caractérisé en ce que** le mécanisme répartiteur est un mécanisme à leviers qui comprend au moins un fléau (41) qui répartit la force de freinage sur les freins de transmission et sur les freins de roue, **en ce que** l'élément de compensation (51) est monté sur un levier (31) dans la zone entre ses extrémités, le levier (31) étant monté en pivotement par une extrémité sur le boîtier (11) et étant accroché par l'autre extrémité dans un câble (5) du mécanisme à leviers, et **en ce que** le câble (5) du mécanisme à leviers et la commande à câbles (4) menant vers le frein de transmission sont articulés sur le fléau (41), un emplacement d'articulation (44) pour le câble d'actionnement (1) ou pour un élément d'actionnement se trouvant dans la zone entre les emplacements d'articulation (43, 42) pour le câble (5) du mécanisme à leviers et pour la commande à câble (4) du frein de transmission.

2. Mécanisme répartiteur de force de freinage selon la revendication 1, **caractérisé en ce que** le fléau (41) est agencé de façon séparée dans l'espace vis-à-vis du boîtier (11) de la transmission et du levier (31), la distance entre le fléau et le levier (31) étant au moins de 0,4 mètres.

3. Mécanisme répartiteur de force de freinage selon la revendication 1, **caractérisé en ce que** le fléau (41) est fixé au niveau de ses extrémités à l'aide de câbles de sécurité (26, 27) sur le boîtier (11), les câbles de sécurité (26, 27) n'étant pas tendus dans le cas normal.

4. Mécanisme répartiteur de force de freinage selon la revendication 1, **caractérisé en ce que** le câble d'actionnement (1), vu en direction de roulement, est guidé immédiatement en avant du fléau (41) dans un oeillet (12) prenant appui sur la superstructure du véhicule.

5. Mécanisme répartiteur de force de freinage selon la revendication 1, **caractérisé en ce que** la commande à câble (4) du frein de transmission, vue en direction de roulement, est guidée immédiatement en arrière du fléau (41) dans un oeillet (14) prenant appui sur la superstructure du véhicule.

6. Mécanisme répartiteur de force de freinage selon la revendication 1, **caractérisé en ce que**, en cas de longueurs différentes des tronçons de levier entre les emplacements d'articulation (44, 43) et (44, 42), le fléau (41) porte un poids de compensation (47) au niveau de l'extrémité libre du tronçon de levier plus court ou plus léger.

7. Mécanisme répartiteur de force de freinage selon la revendication 6, **caractérisé en ce que** les tronçons de levier du fléau (41) sont tarés par rapport à un axe de pivotement horizontal, orienté approximativement parallèlement à la direction longitudinale du véhicule et recoupant l'emplacement d'articulation (44).
